# EUROPÄISCHE PATENTSCHRIFT

(11) **EP 1 250 843 B1**
(45) Veröffentlichungstag und Bekanntmachung des Hinweises auf die Patenterteilung: **20.10.2004**
(21) Anmeldenummer: 02006317.8
(22) Anmeldetag: 21.03.2002
(51) Int. Cl.: A21B 1/48, A21B 3/07, A21B 7/00

(54) **Back-Anlage und Verfahren zum Betrieb der Back-Anlage**
Baking plant and method for operating the baking plant
Installation de cuisson et procédé de fonctionnement de l'installation de cuisson

(30) Priorität: 19.04.2001 DE 10119086
(43) Veröffentlichungstag der Anmeldung: 23.10.2002
(73) Patentinhaber: Werner & Pfleiderer Lebensmitteltechnik GmbH, 91550 Dinkelsbühl (DE)
(72) Erfinder: Knost, Dieter, 91550 Dinkelsbühl (DE)
(74) Vertreter: Rau, Manfred, Dr. Dipl.-Ing.

(56) Entgegenhaltungen:
- EP-A- 0 883 994
- DE-A- 2 016 220
- DE-A- 2 629 716
- DE-A- 19 637 294
- DE-A- 19 647 119
- DE-U- 29 908 724
- FR-A- 1 397 774

## Beschreibung

Die Erfindung betrifft eine Back-Anlage und ein Verfahren zu deren Betrieb.

Für eine Reihe von Brotsorten, meist roggenhaltige Sorten, ist ein sehr heißes Anbacken in Temperaturbereichen von 280° C bis 320° C notwendig, um eine optimale Brotqualität, d.h. eine geschlossene Kruste und ein gutes Gehen des Backgutes, zu erzielen. Das anschließende Ausbacken über einen längeren Zeitraum geht dann bei einer deutlich niedrigeren Temperatur vonstatten.

Kontinuierlich betreibbaren, einherdigen Tunnelöfen wird zu diesem Zweck ein kurzer Vorback- oder Anback-Ofen vorgeschaltet, in dem das Backgut für eine kurze Zeit, und zwar etwa 10 % der Gesamtbackzeit, bei den genannten hohen Temperaturen vorgebacken wird, bevor das Backgut, in der Regel Brot, über eine Übergabebrücke in den Tunnelofen überführt wird.

Aus der EP 0 883 994 A2 (entspr. US 5,875,705 A) ist es bereits bekannt geworden, einen Etagen-Durchlauf-Tunnelofen aus hintereinander angeordneten, weitgehend eigenständigen Modulen aufzubauen, in denen jeweils eine eigenständig regelbare Heizeinrichtung vorgesehen ist, so daß relativ große Temperaturunterschiede zwischen den einzelnen Modulen gefahren werden können. Es läßt sich aber nicht ausschließen, daß bei Temperaturunterschieden zwischen benachbarten Modulen, die 20° C bis 25° C überschreiten, eindeutige Unterschiede in den Temperaturen in den einzelnen Modulen nicht gewährleistet werden können.

Der Erfindung liegt die Aufgabe zugrunde, eine Back-Anlage zu schaffen, die einerseits hohe Vorbacktemperaturen ohne Beeinflussung der Ausbacktemperaturen ermöglicht und die andererseits hohe Durchsatzleistungen zuläßt, und ein Verfahren zum Betrieb der Anlage anzugeben.

Diese Aufgabe wird erfindungsgemäß bei einer Back-Anlage durch die Merkmale im Anspruch 1 und bei einem Verfahren zu deren Betrieb durch die Merkmale des Anspruches 5 gelöst. Durch die erfindungsgemäße Ausgestaltung wird es ermöglicht, daß mehrherdige Durchlauf-Tunnelöfen, die also eine entsprechend hohe Backleistung haben, von in der Regel nur einem Vorback-Ofen bedient werden, der schrittweise kontinuierlich arbeitet. Die vorgeschalteten Einheiten, wie Teigzubereitung, Teilteilung und gegebenenfalls Teigwirken, können kontinuierlich betätigt werden und werden ohne Unterbrechungen in einen schrittweisen Betrieb des Vorback-Ofens und der einzelnen Herde des Ausback-Ofens umgesetzt. Durch die räumliche Trennung des Vorback-Ofens vom Ausback-Ofen können auch sehr hohe Temperaturunterschiede zwischen Vorbacken und Ausbacken realisiert werden.

Vorteilhafte Weiterbildungen ergeben sich aus den Unteransprüchen.

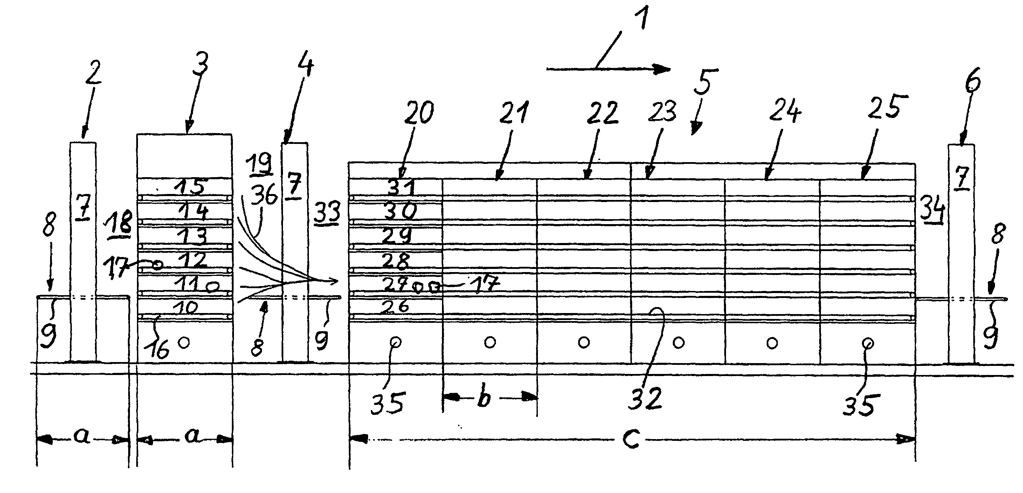

Weitere Merkmale, Vorteile und Einzelheiten der Erfindung ergeben sich aus der nachfolgenden Beschreibung eines Ausführungsbeispiels anhand der Zeichnung, die eine Back-Anlage nach der Erfindung in Seiten-Längs-Ansicht in schematischer Darstellung zeigt.

Die Anlage weist - in Produktionsrichtung 1 gesehen - eine Belade-Vorrichtung 2, einen Vorback-Ofen 3, eine Umlade-Vorrichtung 4, einen Ausback-Ofen 5 und eine Entlade-Vorrichtung 6 auf.

Die Vorrichtungen 2, 4, 6 sind in der Praxis allgemein bekannt und verbreitet und beispielsweise in dem Prospekt "OFEN - Beschickungssysteme vom Roboter bis zur Ausbackhilfe" der Werner & Pfleiderer Lebensmitteltechnik GmbH (Veröffentlichungsnummer 01 363/2-2.0-XII/95we) und aus der DE 196 37 294 A bekannt. Sie weisen ein vertikales Gestell 7 auf, an dem ein horizontaler Beschickungs- bzw. Entnahme-Tisch 8 vertikal verschiebbar angeordnet ist. Auf dem Tisch 8 ist ein reversibel antreibbares Be- bzw. Entladeband 9 vorgesehen. Außerdem ist der Tisch 8 in Produktionsrichtung 1 verschiebbar, so daß er zum Beladen bzw. Entladen an den benachbarten Ofen 3 bzw. 5 herangeschoben werden kann.

Der Vorback-Ofen 3 ist als mehrherdiger Ofen ausgebildet. Im dargestellten Beispiel weist er übereinander eine Anzahl von n = 6 Herden 10, 11, 12, 13, 14, 15 auf. Auch die Herde 10 bis 15 weisen jeweils ein endloses Backband 16 auf, das in Produktionsrichtung 1 antreibbar ist, so daß Backgut 17 von der der Belade-Vorrichtung 2 zugewandten Beschickungsseite 18 zu der der Umlade-Vorrichtung 4 zugewandten Entnahmeseite 19 transportiert werden kann.

Der Ausback-Ofen 5 ist als mehrherdiger Tunnelofen ausgebildet, der aus Modulen 20, 21, 22, 23, 24, 25 aufgebaut. Die Zahl m der Module 20 bis 25 entspricht der Zahl der Herde 10 bis 15 im Vorback-Ofen 3. Die Zahl p der übereinander angeordneten Herde 26 bis 31 im Ausback-Ofen 5 ist grundsätzlich beliebig; sie steht in keinem zwingenden Zusammenhang mit der Zahl der Herde 10 bis 15 im Vorback-Ofen 3. Sie richtet sich primär nach der gewünschten Kapazität und den tatsächlichen Verhältnissen von Ausback-Zeiten im Ausback-Ofen 5 bezogen auf die Vorback-Zeiten im Vorback-Ofen 3. In den Herden 26 bis 31 sind antreibbare Backbänder 32 enthalten, die sich jeweils über die volle Länge eines Herdes 26 bis 31 erstrecken. Auf ihnen kann also das Backgut 16 von der der Umlade-Vorrichtung 4 zugewandten Beladeseite 33 bis zu der der Entlade-Vorrichtung 6 zugewandten Entladeseite 34 des Ausback-Ofens 5 in Produktionsrichtung 1 transportiert werden. Die nutzbare Länge a der Backbänder 16 im Vorback-Ofen 3 entspricht der nutzbaren Länge b des Backbandes 32 in jedem Modul 20 und der nutzbaren Länge der Bänder 9. Die nutzbare Länge a multipliziert mit der Zahl der Herde 10 bis 15 im Vorback-Ofen 3 ist also gleich der nutzbaren Gesamtlänge c im jeweiligen Herd 26 bis 31. Die Herde 10 bis 15 des Vorback-Ofens 3 und die Vorrichtungen 2, 4, 6 sind also einschrittig. Die Länge b eines Moduls 20 bis 25 entspricht also einem Backschritt und das Modul 20 bis 25 einem Backabschnitt. Die Modulbauweise des Ausback-Ofens 5 ist beispielsweise aus der EP 0 883 994 A2 (entspr. US-PS 5,875,705 A) bekannt.

Anstelle des Aufbaus des Ausback-Ofens 5 aus Modulen 20 bis 25 können auch durchgehende Tunnel vorgesehen sein, wobei jeweils ein Backschritt bzw. Transportschritt eines Backbandes 32 über eine Länge b erfolgt. Der Vorteil der Modul-Bauweise besteht darin, daß außer dem Vorback-Ofen 3 jedes Modul 20 bis 25 mit einer eigenen Heizeinrichtung 25 versehen sein kann, so daß über die Gesamtlänge c unterschiedliche Temperaturen gefahren werden können.

Die Betriebsweise ist wie folgt:

Das für einen Herd 26 bis 31 des Ausback-Ofens 5 bestimmte Backgut 17 wird kontinuierlich hergestellt, d.h. die Teigbereitung, das Teilteilen und gegebenenfalls das Wirken erfolgen kontinuierlich. Jeweils wenn die für einen Herd 10 bis 15 des Vorback-Ofens 3 bestimmte und diesen füllende Charge an Backgut 17 fertig ist, wird sie dem Vorback-Ofen 3 zugeführt und in einen Herd 10 bis 15 von der Beschickungsseite 18 her mittels der Belade-Vorrichtung 2 eingeschossen. Aufgrund der kontinuierlichen Herstellung des Backgutes 17 und der jeweils identischen Backgut-Mengen pro Herd 10 bis 15 erfolgt die Beschickung der Herde 10 bis 15 von unten nach oben oder von oben nach unten in festen, also gleichen Beschickungs-Taktzeiten T_{BT}. Zweckmäßigerweise wird die Geschwindigkeit der Herstellung des Backgutes 17 so auf die gewünschte Vorback-Zeit T_{VB} im Vorback-Ofen 3 abgestimmt, daß die Taktzeit der Beschickung jedes einzelnen Herdes 10 bis 15 multipliziert mit der Zahl n der Herde 10 bis 15 gleich der Vorback-Zeit T_{VB} ist. Es gilt also: T_{VB} = ₙ x T_{BT}.

Die Übergabe des Backgutes 17 aus den Herden 10 bis 15 des Vorback-Ofens 3 auf einen Herd 27 des Ausback-Ofens 5 erfolgt in der gleichen Reihenfolge, in der der Vorback-Ofen 3 beschickt worden ist, also von unten nach oben oder von oben nach unten entsprechend den Übergabe-Richtungspfeilen 36 in der Zeichnung, und zwar in der gleichen Beschikkungs-Taktzeit T_{TB}, mit der das Backgut 17 jeweils in die einzelnen Herde 10 bis 15 eingeschossen worden ist. Damit wird erreicht und sichergestellt, daß die Vorback-Zeiten T_{VB} in allen Herden 10 bis 15 gleich sind. Mit der Beschickung des Backbandes 32 im Herd 27 in den einzelnen Arbeitsschritten wird das Backband 32 jeweils um eine Länge b weitertransportiert, so daß der Herd 27 innerhalb der Gesamtbeschickungszeit n x T_{BT} vollständig beschickt ist.

Nach dem Fertigbacken des Backgutes 17 in einem Herd 27 wird dieser mittels der Entlade-Vorrichtung 6 wiederum in der gleichen Taktzeit T_{BT} entladen, mit der die Herde 10 bis 15 des Vorback-Ofens 3 beschickt worden sind.

Da die Ausbackzeit im jeweiligen Herd 26 bis 31 regelmäßig ein Mehrfaches der Vorback-Zeit T_{VB} im Vorback-Ofen 3 beträgt, kann in der dazwischenliegenden Zeit jeweils weiterhin Backgut 17 kontinuierlich/schrittweise dem Vorback-Ofen 3 zugeführt, dort vorgebacken und anschließend in der gleichen Weise in einen anderen Herd 26 bzw. 28 bis 31 des Ausback-Ofens 5 übergeben und dort ausgebacken werden. Da weiterhin jeder Herd 10 bis 15 des Vorback-Ofens 3, der bereits entladen ist, wieder erneut beschickt werden kann, können - bei gleichartigem Vorbackprozeß - alle Herde 10 bis 15 des Vorback-Ofens 3 ständig im Backbetrieb sein, wenn die Vorback-Zeit T_{VB} multipliziert mit der Zahl p der Module 20 bis 25 im Ausback-Ofen 5 gleich der Ausback-Zeit T_{AB} ist, wenn also gilt: p x T_{VB} = T_{AB}.

Wenn in einzelnen Herden 26 bis 31 unterschiedliches Backgut 17 gebakken wird, also in jedem einzelnen Herd identisches Backgut 17, aber von Herd zu Herd unterschiedliches Backgut, dann erfolgt das Beschicken des Vorback-Ofens 3 und das Umladen in den Ausback-Ofen 5 in der geschilderten Weise; es kann dann nur vorkommen, daß nach einem vollständigen Zyklus, der alle beschickten Herde 26 bis 31 umfaßt, der Vorbackbetrieb unterbrochen werden muß, bis im Ausback-Ofen 5 wieder ein Herd 26 bis 31 freigeworden ist. Grundsätzlich ist es auch möglich, einem Ausback-Ofen 5 zwei Vorback-Öfen 3 vorzuordnen, um bei vorgegebener Taktzeit bzw. Leistung mehr Vorbackzeit zu gewinnen. Alternativ kann der Vorback-Ofen 3 horizontal in zwei Abschnitte unterteilt werden, um unterschiedliche Vorback-Temperaturen zu realisieren.

## Patentansprüche

1. Back-Anlage mit
- einer Belade-Vorrichtung (2),
- einem der Belade-Vorrichtung (2) in einer Produktionsrichtung (1) nachgeordneten, mehrherdigen Vorback-Ofen (3) mit einer Anzahl n von übereinander angeordneten Herden (10 bis 15),
- einer dem Vorback-Ofen (3) in Produktionsrichtung (1) nachgeordneten Umlade-Vorrichtung (4),
- einem der Umlade-Vorrichtung (4) in Produktionsrichtung (1) nachgeordneten, als Durchlauf-Tunnelofen ausgebildeten mehrherdigen Ausback-Ofen (5) mit einer Anzahl m von in Produktionsrichtung (1) hintereinander anordneten Backabschnitten (Module 20 bis 25), wobei m und n in einem ganzzahligen Verhältnis zueinander stehen,
- einem Backband (16) in jedem Herd (10 bis 15) des Vorback-Ofens (3) und
- einer dem Ausback-Ofen (5) in Produktionsrichtung (1) nachgeordneten Entlade-Vorrichtung (6).

2. Back-Anlage nach Anspruch 1, **dadurch gekennzeichnet,**
**daß** für die Anzahl n der Herde (10 bis 15) im Vorback-Ofen (3) im Verhältnis zur Anzahl m der Backabschnitte (Module 20 bis 25) in jedem Herd (26 bis 31) des Ausback-Ofens (5) gilt: m = n.

3. Back-Anlage nach Anspruch 1 oder 2, **dadurch gekennzeichnet, daß** jeder Backabschnitt durch ein Modul (20 bis 25) gebildet wird.

4. Back-Anlage nach einem der Ansprüche 1 bis 3, **dadurch gekennzeichnet,**
**daß** jedes Backband (16) schrittweise antreibbar ist.

5. Verfahren zum Betrieb einer Back-Anlage nach einem der Ansprüche 1 bis 4, **dadurch gekennzeichnet,**
**daß** Backgut (17) den Herden (10 bis 15) des Vorback-Ofens (3) mit einer konstanten Beschickungs-Taktzeit T_{BT} von Herd zu Herd (10 bis 15) zugeführt wird,
**daß** das Backgut (17) nach einer Vorback-Zeit T_{VB} den Herden (10 bis 15) des Vorback-Ofens (3) mit der Beschickungs-Taktzeit T_{BT} entnommen und den Backabschnitten (Module 20 bis 25) eines Herdes (26 bis 31) des Ausback-Ofens (5) taktweise zugeführt und dort über eine Ausback-Zeit T_{AB} ausgebacken wird und
**daß** das Backgut (17) dem Ausback-Ofen (5) taktweise mit der Beschickungs-Taktzeit T_{BT} entnommen wird.

## Claims

1. Baking plant with
- a loading device (2),
- a pre-baking oven (3) with a number of stoves n (10 to 15) arranged on top of each other located after the loading device (2) in a direction of production (1),
- a transfer device (4) located after the pre-baking oven (3) in the direction of production (1),
- a baking oven (5) with more than one stove, provided as a transitional tunnel oven, located after the transfer device (4) in the direction of production (1), with a number of baking sections m (modules 20 to 25) located one after the other in the direction of production (1), m and n standing in an integral relation to each other,
- a baking belt (16) in every stove (10 to 15) of the pre-baking oven (3) and
- an unloading device (6) located after the baking oven (5) in the direction of production (1).

2. Baking plant according to claim 1, **characterised in that** the formula m = n relates to the number of stoves n (10 to 15) in the pre-baking oven (3) in relation to the number of baking sections m (modules 20 to 25) in each stove (26 to 31) of the baking oven (5).

3. Baking plant according to claim 1 or 2, **characterised in that** each baking section is formed by a module (20 to 25).

4. Baking plant according to any one of claims 1 to 3, **characterised in that** each baking belt (16) can be operated step-by-step.

5. Method for the operation of a baking plant according to any one of claims 1 to 4, **characterised in**
**that** the baking product (17) is fed into the stoves (10 to 15) of the pre-baking oven (3) with a constant loading timing T_{BT} from stove to stove (10 to 15),
**that** the baking product (17) is removed from the stoves (10 to 15) of the pre-baking oven (3) according to a pre-baking time T_{VB} and fed into the baking sections (modules 20 to 25) of a stove (26 to 31) of the baking oven (5) at a set timing and baked there for a baking time T_{AB} and
**that** the baking product (17) is removed from the baking oven (5) at a set timing in relation to the loading timing T_{BT}.

## Revendications

1. Installation de cuisson avec
- un dispositif de chargement (2),
- un four de précuisson (3) à plusieurs soles, monté en aval du dispositif de chargement (2) dans un sens de production (1), avec un nombre n de soles placées les unes sur les autres (10 à 15),
- un dispositif de transbordement (4) monté en aval du four de précuisson (3) dans le sens de production (1),
- un four de défournement (5) à plusieurs soles, configuré comme un four tunnel continu, monté en aval du dispositif de transbordement (4) dans le sens de production (1), avec un nombre m de segments de cuisson placées les uns derrière les autres (modules 20 à 25) dans le sens de production (1), moyennant quoi m et n ont un rapport entier l'un à l'autre,
une bande de cuisson (16) dans chaque sole (10 à 15) du four de précuisson (3)
et
- un dispositif de déchargement (6) monté en aval du four de défournement (5) dans le sens de production (1).

2. Installation de cuisson selon la revendication 1, **caractérisée en ce que**, pour le nombre n de soles (10 à 15) dans le four de précuisson (3) par rapport au nombre m de segments de cuisson (modules 20 à 25) dans chaque sole (26 à 31) du four de défournement (5), m = n.

3. Installation de cuisson selon la revendication 1 ou 2, **caractérisée en ce que** chaque segment de cuisson est formé par un module (20 à 25).

4. Installation de cuisson selon l'une quelconque des revendications 1 à 3, **caractérisée en ce que** chaque bande de cuisson (16) peut être entraînée de manière intermittente.

5. Procédé de fonctionnement d'une installation de cuisson selon l'une quelconque des revendications 1 à 4, **caractérisé en ce que**
le produit de cuisson (17) est amené aux soles (10 à 15) du four de précuisson (3) à une cadence de chargement constante T_{BT} d'une sole à l'autre (10 à 15),
le produit de cuisson (17), après un temps de précuisson T_{VB}, est enlevé des soles (10 à 15) du four de précuisson (3) à la cadence de chargement T_{BT} et amené aux segments de cuisson (modules 20 à 25) d'une sole (26 à 31) du four de défournement (5) selon une cadence et défourné là pendant un temps de défournement T_{AB} et
le produit de cuisson (17) est enlevé du four de défournement (5) en cadence avec la cadence de chargement T_{BT}.
